# EUROPEAN PATENT APPLICATION

(11) **EP 0 869 160 A2**
(43) Date of publication of application: **07.10.1998**
(21) Application number: 98105790.4
(22) Date of filing: 30.03.1998
(51) Int. Cl.: C09D 11/00

(54) **Ink compositions**

(30) Priority: 31.03.1997 US 828850
(71) Applicant: Xerox Corporation, Rochester, New York 14644 (US)
(72) Inventor: Nichols, Garland J., Ontario, New York 14519 (US); Marsh, Daniel G., Webster, New York 14580 (US); Cheng, Chieh-Min, Rochester, New York 14625 (US)
(74) Representative: Grünecker, Kinkeldey, Stockmair & Schwanhäusser Anwaltssozietät

(57) **Abstract**

An ink composition comprised of (a) an ink vehicle, (b) resin emulsion, which emulsion contains resin particles, and (c) pigment, and wherein said resin particles and pigment are separated or dissociated.

## Description

### BACKGROUND OF THE INVENTION

This invention relates to ink jet inks, and more specifically, to improved particulate inks for use in ink jet printing processes, including printing processes such as thermal ink jet and piezoelectric or acoustic ink jet processes, and wherein there is provided, for example, archival print quality comparable to that obtained in xerographic dry toner development systems. With the inks of the present invention there are enabled a number of advantages, such as extended ink stability, excellent developed images and prints, high optical densities, and the like.

### PENDING APPLICATIONS

Illustrated in copending applications U.S. Serial No. 560,783; U.S. Serial No. 536,235 and U.S. Serial No. 380,550 are ink jet inks wherein the resin and pigment, or colorant are not believed to be separated.

### PRIOR ART

Ink jet printing processes and apparatus for such processes are known. Major ink jet processes can be classified as thermal ink jet and acoustic or piezoelectric ink jet processes.

In thermal ink jet printing processes, the printer typically employs a resistor element in a chamber provided with an opening for ink to enter from a plenum. The plenum is connected to a reservoir for storing the ink. A plurality of such resistor elements is generally arranged in a particular pattern, referred to as a primitive, in a printhead. Each resistor element is associated with a nozzle through which ink is expelled toward a print medium, such as paper. The entire assembly of printhead and reservoirs comprises an ink jet pen. In operation, each resistor element is connected via a conductive trace to a microprocessor, where current-carrying signals cause one or more selected elements to heat up. The heating creates a bubble of ink vapor in the chamber, which in turn expels a droplet of ink through the nozzle toward the print medium. In this manner, firing of a plurality of such resistor elements in a particular order in a given primitive forms alpha numeric characters, performs area fill, and provides other print capabilities on the medium. The thermal ink jet printing process is described in more detail, for example, in U.S. Patents 5,169,437 and 5,207,824, the entire disclosures of each of these patents being totally incorporated herein by reference.

In an acoustic or piezoelectric ink jet system, ink droplets are propelled to the recording medium by means of a piezoelectric oscillator. In such a system, a recording signal is applied to a recording head containing the piezoelectric oscillator causing droplets of the ink to be generated and subsequently expelled through the printhead in response to the recording signal to generate an image on the recording medium. In this printing system, a recording signal is converted into a pulse by a signal processing means, such as a pulse converter and then applied to the piezoelectric oscillator. A change in pressure on the ink within an ink chamber in the printhead caused by the recording signal results in droplets of ink being ejected through an orifice to a recording medium. Such an ink jet system is described in more detail, for example, in U.S. Patent 4,627,875, the entire disclosure of which is incorporated herein by reference.

A related printing method is the impulse, or drop-on-demand, ink jet printing process. Impulse ink jet printing processes generally use a hot melt ink jet ink. For example, in the impulse printing process, the hot melt ink is heated into a fluid phase and is caused to form a convex meniscus at the printhead nozzle tip by hydrostatic pressure. This pressure causes the end of the ink bubble to intrude into an electrostatic field. The ink is then electrostatically drawn into a single file stream of drops that traverse the span between the tip of the nozzle and the carrier (paper, etc.). Impulse printing processes, and hot melt inks for use therein are described, for example, in U.S. Patent 4,659,383, the entire disclosure of which is incorporated herein by reference. A disadvantage of the impulse printing processes, however, is that the resultant print image has a waxy texture and appearance, sometimes referred to as crayoning, and which may smear when abraded due to the presence of wax in the hot melt ink jet ink. The resultant print image thus generally has a lower archival quality.

In these and other ink jet recording processes, it is necessary that the ink being used meet various stringent performance characteristics. These performance characteristics are generally more stringent than those for other liquid ink applications, such as for writing instruments, like a fountain pen, felt pen, and the like). In particular, some or all of the following conditions are generally desired for inks utilized in ink jet printing processes:
(1) the ink should possess liquid properties, such as viscosity, surface tension and electric conductivity, optimized for the discharging conditions of the printing apparatus, such as the thermal ink jet heater temperature increase;
(2) the ink should be capable of being stored in the ink jet device for an extended period of time between cycles without causing clogging of the printhead orifices during use. In a very stressful situation the device should be able to remain uncapped for hours or days and still be able to recover all jets when operated;
(3) the recording liquid should be quickly fixable onto recording media, such as paper, film, and the like to permit the outlines of the resulting ink dots to be smooth, and wherein there is minimal smearing of the printed image;
(4) the resultant ink image should be of high quality, such as having a clear color tone and high optical density. The ink image should also have a large color gamut ideally, equal to or better than that obtained with laser xerographic printers;
(5) the resultant ink image should exhibit excellent waterfastness (water resistance) and lightfastness (light resistance);
(6) the ink should not aggressively chemically attack, corrode or erode surrounding materials such as the ink storage container, printhead components, orifices, and the like;
(7) the ink should not possess an unpleasant odor and should not be toxic or flammable; and
(8) the ink should exhibit low foaming and good shelf life stability characteristics for properties such as particle growth, viscosity creep, pH stability, and the like.

Various inks for ink jet printing processes are known in the art. For example, various ink jet inks are disclosed in U.S. Patents Nos. 4,737,190 and 5,156,675. Generally, the ink jet inks of the prior art are aqueous inks, comprising a major amount of water, a humectant and/or a co-solvent, and colorant. By selecting specific components such as humectants, colorant, or other components, adjustment of the print characteristics of the resultant ink can be achievable in some instances. Also, illustrated in U.S. Patent 5,324,349 are ink jet inks with saccharides and polyols, and wherein the resin and pigment are associated with, or in contact with each other, causing undesirable ink stability and other disadvantages.

The process of electrostatographic imaging includes the step of forming a charge on an imaging member in the form of an image, such as an image of an original document being reproduced, or a computer generated image written by, for example, a raster output scanner. This records an electrostatic latent image on the imaging member corresponding to the original document or computer-generated image. The recorded latent image is then developed by bringing oppositely charged toner particles into contact with it. This forms a toner powder image on the imaging member that is subsequently transferred to a substrate, such as paper. Finally, the toner powder image is permanently affixed to the substrate in image configuration, for example by heating and/or pressing the toner powder image. These types of xerographic imaging processes are described in, for example, U.S. Patents 4,762,674; 5,019,477 and 5,254,427.

Various xerographic imaging methods utilizing a black or colored dry toner composition provide images and prints with very high quality. These images and prints generally have high fix, smear resistance, and excellent waterfastness and lightfastness, and thus these imaging methods are selected for archival quality images and prints. These high archival qualities are generally not obtainable using ink jet printing processes. However, the ink jet printing processes possess an advantage over the xerographic imaging processes in that the process and apparatus used in an ink jet printing process are generally less costly and less cumbersome. For example, both the material and operating costs of an ink jet printing process are generally less costly than for a xerographic development process.

Ink jet printing systems, and particularly thermal ink jet printing systems possess a number of print quality disadvantages as compared to xerographic development systems employing polymer resin dry based toners. These disadvantages include the following:
(1) Lack of 100 percent waterfastness in black and color inks. Although advances have recently been made to improve waterfastness, many of the ink jet ink compositions do not achieve 100 percent waterfastness, and therefore are subject to smearing, line blooming, or other problems in high humidity atmospheres, and the blending or diluting of colors when prints contact water.
(2) Lack of edge sharpness. It is important that the developed images exhibit high edge acuity, being sharp rather than ragged. Although some printers have addressed this problem by incorporating multipass printing and elaborate pixel management algorithms and/or heating of the imaging substrate, some edge raggedness exists with the dye based color inks used in these printing systems.
(3) Inter-color bleed. Water-based ink jet printing processes possess in many instances inter-color bleed; that is the bleeding of color from one freshly printed area into another at a boundary line before the water-based inks dry. This is noticeable to the human eye, for example, when black text is printed on a yellow highlight background. Since the inter-color bleed occurs in much less than one second after printing, it cannot be eliminated by drying the imaging substrate after printing has occurred. Some printing systems have addressed the problem by controlling the printing process so that there is no "wet-on-wet" printing. However, this tends to slow down the printing process.
(4) Lack of saturation in colors on plain paper. In ink jet printing processes, the highest quality prints have generally been obtained by printing on specially designed coated papers. However, when standard uncoated papers are used, without heating of the paper before or during printing, the color saturation is lower, resulting in less acceptable prints. Thus while specially designed coated papers may produce higher quality prints, they also increase the materials cost for ink jet printing processes.
(5) Show through. One reason for the reduced print quality of water based ink jet printing processes is that the colorant penetrates further into the surface of absorbent imaging substrates, such as paper. A direct result of the increased penetration into the paper surface is the problem known as "show through 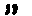 , i.e. the increased visibility, relative to xerographic prints, of the image from the back side of the paper. In addition to being objectionable in itself to some users, the show through problem also severely limits the possibility for duplex printing using ink jet inks on such papers.
(6) Paper latitude. Ink jet printing processes using water-based ink generally exhibit a smaller paper latitude as compared to xerographic imaging processes. For example, in printing processes that use only ambient temperature drying, the paper latitude is poor.

Of recent high importance is the stability of the ink, for example ink jet inks destabilize over a period of time, such as two days, and therefore cannot be used to obtain smudgeproof images, and in many instances the ink jet ink may be unusable. These and other disadvantages are alleviated with the present invention in embodiments thereof. Also, there is a need for stable ink jet compositions that satisfy, or minimize a number of the above-described functional requirements, while simultaneously providing high print quality prints with archival properties on a wide variety of recording media, including plain paper, transparencies and cloth. Especially useful are ink jet ink compositions that can provide archival quality prints equivalent to laser xerography without the problems generally associated with ink jet inks.

### SUMMARY OF THE INVENTION

The present invention provides stable ink jet ink compositions that provide high print quality and archival properties on a wide variety of print media, including paper, transparencies and cloth. The ink compositions of the present invention satisfy, it is believed, a number of the various end-user requirements illustrated herein, including wide color gamut, excellent waterfastness, and excellent lightfastness equal to xerographic prints, superior storage stability, low odor and minimum toxicity. Importantly, the present invention provides ink compositions that are stable for extended time periods, for example over six months, and more specifically, from about 6 to about 18 months, wherein the ink components do not separate, and more specifically, wherein there is an absence of mechanical or chemical bonding between the resin and pigment, and wherein the ink resin is generated, for example, by the emulsion polymerizations of monomers with at least one monomer being ionic, and preferably wherein there is formed a water soluble polymer phase and an ionic particle phase containing a water insoluble polymer.

In the present invention in embodiments thereof, there is selected a resin emulsion which comprises water insoluble resin particles dispersed in a continuous aqueous, or water phase. The resin emulsion particle phase amounts typically range, for example, from about 5 percent to about 50 percent by weight, and preferably from about 20 to about 40 percent by weight, and the continuous aqueous phase amount ranges, for example, from about 50 to about 95 percent, and preferably from about 50 to about 95 percent by weight. When the resin emulsion is generated by emulsion polymerization, there is permitted an emulsion polymerization mixture comprising a continuous aqueous phase, a discontinuous dispersed ionic particulate phase containing a water insoluble polymer, or the resin emulsion particles. The aforementioned mixture usually contains a dispersing medium, for example water; emulsifiers, typically ionic and nonionic surfactants; residual initiator and chain transfer agents, and fragments thereof; and resin including both the ionic particulate phase and dissolved substances present in the aqueous phase. For the total emulsion polymerization mixture, the dispersing medium amount is typically from about 50 to about 95 percent by weight, preferably from about 60 to about 80 percent, and the water is present in amounts of typically from about 40 to about 93 percent. Emulsifier amounts typically range from about 0.01 to about 10 percent, preferably from about 0.5 to about 3 percent, and residual initiator and chain transfer agents and fragments thereof amounts typically range from about 0.01 to about 5 percent by weight, preferably from about 0.05 to about 1 percent. The resin particulates, which are the ionic particulate phase, are typically present in amounts of from about 5 to about 50, and preferably from about 20 to about 40 percent, and the dissolved resin material in the aqueous phase is typically present in amounts of from about 0.1 to about 10 percent, and preferably from about 1 to about 7 percent of percent of the total emulsion polymerization mixture Other amounts not specifically recited may be selected in embodiments.

The water soluble polymer fraction amount of the emulsion polymerization mixture resin ranges from about 1 to about 30 percent of the total resin, and the ionic particle phase amount ranges from about 70 to about 99 percent of the total resin, and wherein the sum total is about 100. Of the total resin materials in the emulsion polymerization mixture, the preferred range amount is, for example, from about 1 to about 5 percent of the water soluble polymer fraction, and thus the ionic particle phase, i.e. latex, preferred range amount is from about 95 to about 99 percent.

Embodiments of the present invention include an ink composition comprised of (a) an ink vehicle, (b) resin emulsion, which emulsion contains resin particles, and (c) colorant, and wherein the resin particles and colorant are separated or dissociated.

Embodiments of the invention include further an ink composition comprised of (a) an ink vehicle, (b) resin emulsion comprised of resin particles, and (c) colorant, and wherein the resin particles and colorant are separated or dissociated, and wherein the resin particles contain on the surface thereof ionic groups; an ink composition wherein the colorant is a pigment; an ink composition wherein the ionic groups are carboxylic acid groups; an ink composition wherein the resin emulsion comprises water, and wherein ionic groups on the resin surface are carboxylic acid groups; an ink composition wherein the carboxylic acid groups are present in an amount of from about 30 to about 90 weight percent on the surface of the resin particles; an ink composition wherein the carboxylic acid groups are present in an amount of from about 0.1 to about 40 weight percent in a continuous aqueous phase of water, and from about 1 to about 40 weight percent in the bulk of the resin particles; an ink composition, wherein the M_{w} for the resin particles of the resin emulsion is from about 5,000 to about 3,000,000, the glass temperature thereof is from about zero to about 120°C, the weight ratio of resin to pigment is from about 1:15 to about 15:1, and the resin emulsion is present in an amount of from about 0.1 to about 50 weight percent based on the weight percent of the solid components in the ink; an ink composition wherein the volume average resin particles size is from about 0.025 micron to about 2; an ink composition wherein the colorant is a pigment, and the resin particles and pigment are separated by a space of at least about 10⁴ Angstroms, and which separation is enabled primarily by ionic carboxylate acid groups; an ink composition wherein the resin particles and pigment are separated by a space of from about 10⁴ Angstroms to about 10⁵ Angstroms; an ink composition wherein the resin particles and colorant of pigment are separated by a space of from about 10⁴ Angstroms to about 10⁵ Angstroms, and which separation is enabled by ionic carboxylate acid groups, and wherein there is an absence of bonding by chemical or mechanical means between the resin particles and pigment; an ink composition wherein the vehicle is selected from the group consisting of ethylene glycol, propylene glycol, diethylene glycols, triethylene glycols, thioglycol, glycerine, dipropylene glycols, polyethylene glycols, and polypropylene glycols; amides such as urea and substituted ureas; ethers such as ethylene glycolmonomethyl ether, ethylene glycolmonoethyl ether, diethylene glycolmonomethyl ether, diethylene glycolmonoethyl ether, diethylene glycolmonobutyl ether, propylene glycolmonomethyl ether, propylene glycolmonomethyl ether, propylene glycolmonobutyl ether, triethylene glycol ether, tripropylene glycol monomethyl ether, carboxylic acids and their salts; esters; alcohols such as ethyl alcohol, isopropyl alcohol, butyl alcohol, and benzyl alcohol, organosulfides, organosulfoxides, sulfones, alcohol derivatives, carbitol, butyl carbitol, cellusolve, ether derivatives, amino alcohols, ketones, 1,3-dimethylimidizalidinone, N-methyl-2-pyrrolidinone, 2-pyrrolidone, cyclohexyl-pyrrolidone, hydroxyethers, amides, sulfoxides, lactones, and mixtures thereof; an ink composition wherein the pigment is present in an amount of from about 1 to about 15 weight percent; an ink composition wherein the pigment is carbon black; an ink composition wherein the carbon black is dispersed by an ionic component, a polymeric dispersant, or the carbon black is self dispersing by the covalently binding of suspending groups to the carbon black surface; an ink composition wherein the pigment is a cyan pigment, a magenta pigment, a yellow pigment, a red pigment, a blue pigment, or mixtures thereof; an ink composition with a viscosity of from about 1.5 to about 5 centipoise, and a surface tension of from about 30 to about 55 dynes per centimeter; an ink composition further containing ink additives; an ink composition wherein the ink additives are selected from the group consisting of biocides, buffering agents, anti-mold agents, pH adjustment agents, electric conductivity adjustment agents, chelating agents, anti-rusting agents, anti-cockle agents, and stabilizing agents, and which components are selected in an amount of from about 0.01 to about 10 weight percent; an ink composition wherein said buffering agents are sodium borate, sodium hydrogen phosphate, sodium dihydrogen phosphate, or mixtures thereof; said biocides are DOWICIL 150™, 200™, and 75™, benzoate salts, sorbate salts, or mixtures thereof; said pH controlling agents are acids, bases of hydroxides of alkali metals of lithium hydroxide; phosphate salts; carbonate salts; carboxylate salts; sulfite salts; amine salts; amines of diethanolamine, and triethanolamine; and mixtures thereof; anticurl agents of trimethylolpropane, N-acetylethanolamine, N-N-diacetyl piperazine, triethylene glycol, N-(2-aminoethyl) ethanolamine, 1,4-butanediol, N-ethylformamide, 2-methyl-1,5-pentanediol, 1,5-pentanediol, diethylene glycol, 2,2 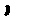 -oxybisethanol, and mixtures thereof; cheating agents of ethylenediaminetetraacetic acid, and salts thereof; stabilizing agents of polyethylene oxide/bisphenol A polymer; and external salts of quaternary ammonium halide salts of ammonium chloride, ammonium bromide or lithium chloride; an ink composition wherein the resin emulsion is formed by the emulsion polymerization of a monomer, or monomers, at least one of said monomers being an ionic monomer containing carboxylic acid groups; an ink composition wherein the monomer is selected from the group consisting of vinyl, conjugated dienes, ethylenically unsaturated monoolefins, vinyl esters, esters of alphamethylene aliphatic monocarboxylic acids, acrylonitrile, acrylamide, vinyl ethers, vinyl ketones, vinylidene halides, and mixtures thereof; and the polymers or resins formed therefrom are acrylic acid emulsions, vinyl acetate emulsions, vinyl chloride emulsions, acryl-styrene emulsions, polybutadiene emulsions, or styrene emulsions, diene emulsions, acrylate emulsions, vinyl ether emulsions, vinyl ketone emulsions, and vinylidene halide emulsions; an ink composition wherein the ionic monomers are comprised of acid or basic olefinic monomers of acrylic acid, methacrylic acid, acrylamide, methacrylamide, quaternary ammonium halide of dialkyl or trialkyl acrylamides or methacrylamides, vinylpyridine, vinylpyrrolidone, vinyl-N-methylpyridinium chloride, a sulfonated monomer, or a phosphonated monomer; an ink composition wherein the monomers are acrylic acid, and one to three acrylates or methacrylates; an ink composition wherein the monomers are an acrylate, a methacrylate, and an acrylic acid with from about 30 to about 80 weight percent of acrylate, from about 30 to about 80 weight percent of methacrylate, and from about 1 to about 25 percent of acrylic acid; an ink composition wherein the monomers are an acrylate, a methacrylate, and an acrylic acid with about 60 weight percent of methyl methacrylate, about 30 weight percent of butyl acrylate and about 10 percent of acrylic acid.

Embodiments further include a stable ink jet ink comprised of a vehicle, a resin emulsion and a colorant, and wherein the emulsion resin particles and colorant are separated.

Embodiments also include a process for the preparation of the ink compositions indicated herein which comprises the mixing of resin emulsion, pigment and vehicle, and wherein the resin emulsion is generated by emulsion polymerization; a process wherein the the emulsion polymerization comprises emulsifying of the polymerization components of monomer, ionic comonomer, water, surfactant, initiator, and optional chain transfer agent; heating the resulting emulsified mixture; and cooling thereby obtaining said resin emulsion; a process wherein there results a polymer, or resin by a polymer microsuspension process, or polymer solution:microsuspension process; a process wherein the polymer microsuspension process comprises dispersing a molten polymer in an aqueous media containing a surfactant, or a mixture of surfactants; stirring the mixture with heating and agitating thereby obtaining resin emulsions; and the polymer solution:microsuspension process comprises dissolving a polymer in an organic solvent; dispersing the resulting solution in an aqueous media containing a surfactant, or mixture of surfactants; and stirring the mixture with optional heating to remove the organic solvent thereby obtaining resin emulsions.

Embodiments also include an ink jet recording process comprising ejecting in the form of ink droplets the ink indicated herein from an orifice in accordance with a recording signal to form an image on a recording medium; a process further comprising fixing said image on said recording medium; a process wherein the image fixing comprises at least one member selected from the group consisting of air drying, heat drying, microwave drying, vacuum drying, radiant fusing and pressure fusing said image onto said recording medium; an ink composition wherein the resin emulsion comprises a water soluble phase and an ionic particle phase; an ink composition wherein the resin emulsion water soluble polymer phase amount ranges from about 1 to about 30 percent of the total resin, and the ionic particle phase amount ranges from about 70 to about 99 percent of the total resin; an ink composition wherein the ionic groups are weak acids, strong acids, anionic salts, or strong bases; an ink composition wherein the ionic groups are weak acids of a carboxylic acid, strong acids of a sulfonic acid, anionic salts of a sulfate, weak bases of ammonium, or strong bases of dialkyl amine and cationic salts of quaternary ammonium; an ink composition wherein the particle surface ionic groups are selected from the group consisting of carboxylic acid, sulfonic acid, ammonium, alkyl amines, pyridine, alkyl pyridines, and the salts thereof; and an ink composition wherein particle surface weak acid monomers are selected, and which monomers are acrylic acid, methacrylic acid, itaconic acid, maleic acid, or fumeric acid; particle surface strong acid monomers of vinyl sulfonic acid, styrene sulfonic acid, 2-acrylamido-2-methylpropanesulfonic acid, or 2-sulfoethyl methacrylate; particle surface basic monomers of acrylamide, methacrylamide, quaternary ammonium halide of dialkyl or trialkyl acrylamides or methacrylamides, vinylpyridine, vinylpyrrolidone, or vinyl-N-methylpyridinium chloride.

In embodiments, the inks of the present invention are comprised of a resin emulsion mixture, colorant, especially pigment, an ink vehicle, such as Sulfolane, and optionally initiator, and wherein the solids are comprised of resin, or resin particles, and colorant, especially pigment. Of importance with respect to embodiments of the present invention is the selection of ionic, especially carboxylated latexes, preferably prepared by emulsion polymerization, and wherein the resin particles and pigment particles are dissociated, that is for example they are not in contact; an absence of bonding between pigment and resin particles is present; and there is permitted space therebetween. The carboxylated resin emulsion enables the presence of carboxylic acid groups, or group on at least the surface of the resin particles, and in this manner permits superior ink stability primarily in view of the dissociation, or separation of the resin particles and the pigment. The carboxylic acid groups may also be present in the resin and in the ink vehicle as indicated herein. Preferably a major amount of carboxylic acid groups, and originating from the carboxylated latex, are present on the surface of the resin particles in amounts, for example, of from about 35 to about 90 percent by weight, and preferably from about 40 to about 80 percent by weight. The amount of carboxylic acid groups present within the resin particle can be, for example, from about 1 to about 40 weight percent, and preferably from about 2 to about 40 weight percent. The amounts of carboxylic acid groups that may also be present in the ink vehicle are, for example, from about 0.01 to about 40 weight percent, and preferably from about 0.05 to about 20 weight percent. Other suitable amounts may be selected. The carboxylic acid groups enable spacing and dissociation between the resin particle and pigment, which spacing is, for example, from about 10⁴ Angstroms to 10⁵ Angstroms, and which spacing allows the pigment and resin particle to remain dissociated. Other suitable spacings may be selected.

The carboxylated resin emulsion generally comprises resins generated from monomers with carboxylic acid groups, such as resin emulsion 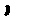 s generated from copolymers of alkyl, such as methyl methacrylate, alkyl, such as butyl acrylate, and acrylic acid, preferably at a weight ratio of 60:30:10. Resin, or polymer examples include conjugated diene monomeric units including, but are not limited to 1,3-butadiene, isoprene, 2,3-dimethyl-1,3-butadiene, piperylene, 3-butyl-1,3-octadiene, 2-phenyl-1,3-butadiene and the like, and mixtures thereof. Typical examples of vinyl monomeric units include, but are not limited to styrene; p-chlorostyrene; vinyl naphthalene; vinyl chloride; vinyl bromide; vinyl fluoride; ethylenically unsaturated monoolefins such as ethylene, propylene, butylene, isobutylene and the like; vinyl esters such as vinyl acetate, vinyl propionate, vinyl benzoate, vinyl butyrate, and the like; esters of alphamethylene aliphatic monocarboxylic acids such as methyl acrylate, ethyl acrylate, n-butyl acrylate, isobutyl acrylate, dodecyl acrylate, n-octyl acrylate, 2-chloroethyl acrylate, phenyl acrylate, methylalpha-chloroacrylate, methyl methacrylate, ethyl methacrylate, butyl methacrylate and the like; acrylonitrile; methacrylonitrile; acrylamide; vinyl ethers such as vinyl methyl ether, vinyl isobutyl ether, vinyl ethyl ether and the like; vinyl ketones such as vinyl methyl ketone, vinyl hexyl ketone, methyl isopropenyl ketone and the like; vinylidene halides such as vinylidene chloride, vinylidene chlorofluoride and the like; N-vinyl indole, N-vinyl pyrrolidene and the like; and mixtures thereof. Mixtures refer, for example, to at least two, and up to 10, and preferably five, and wherein for each component in the mixture there is selected an appropriate amount thereof, and wherein the total thereof is about 100 parts, or percent. For example, for a mixture of two, from about 1 to about 99 percent of a first component can be selected, and from about 1 to 99 percent of a second component, and wherein the total of the two is about 100.

The resin emulsion selected for the present invention is preferably prepared by emulsion polymerization methods, and the monomers utilized in such processes are known and can be, for example, selected from the group consisting of styrene, methacrylates, butadiene, isoprene, and optionally, acid or basic olefinic monomers such as acrylic acid, methacrylic acid, acrylamide, methacrylamide, quaternary ammonium halide of dialkyl or trialkyl acrylamides or methacrylamides, vinylpyridine, vinylpyrrolidone, vinyl-N-methylpyridinium chloride and the like. The acid or basic groups can be presented in various amounts, for example from about 1 to about 40 percent, and preferably from about 3 to about 25 weight percent. Known chain transfer agents, for example dodecanethiol or carbon tetrabromide in effective amounts, such as for example from about 1 to 10 percent, can also be selected when preparing resin emulsions by emulsion polymerization. Other processes of obtaining resin emulsion particles of, for example, from about 0.01 to about 3 microns in volume average diameter, as determined by known means, such as a Coulter Counter, can be selected from polymer microsuspension process, such as disclosed in U.S. Patent 3,674,736, the disclosure of which is totally incorporated herein by reference, polymer solution:microsuspension process, such as those disclosed in U.S. Patent 5,290,654, the disclosure of which is totally incorporated herein by reference, mechanical grinding processes, or other known processes, and the like, reference U. S. Patent 5,567,566, the disclosure of which is totally incorporated herein by reference.

When incorporated into the ink jet ink compositions of the present invention, it is preferred that the solid particles be of a small size, primarily to minimize, or to prevent the clogging of printhead orifices and to provide excellent for ink jet inks. Accordingly, in embodiments of the present invention, it is preferred that the resin emulsion/particles have a number average particle size (average diameter) of from about 0.01 micronsto about 2 microns. More preferably, the average particle size of the resin emulsion particles is from about 0.05 micron to about 1 micron, and yet more preferably from about 0.05 micron to about 0.5 micron.

The ink composition may contain up to about 25 percent or more by weight of the colorants. Preferably, the ink jet ink compositions of the present invention contain from about 2 percent to about 20 percent by weight of the colorant, and more preferably from about 2.5 percent to about 15 percent by weight. Other suitable amounts of colorant may be selected. The preferred colorant is a pigment, or pigment particles.

In ink jet inks of the present invention, colorant like the pigment is not associated with the resin emulsion particles, and remains dissociated therefrom as indicated herein, and which dissociation enables, for example, superior ink stability. In embodiments of the present invention, the colorant for the ink jet ink compositions may be a pigment, a dye, or mixtures thereof, and preferably is a pigment, such as carbon black. Pigment examples include carbon black, cyan, magenta, yellow, red, blue, green, brown, mixtures thereof, and the like. Examples of suitable black pigments include various carbon blacks such as channel black, furnace black, lamp black, and the like, which may be used either as dry powders or in a predispersed form, such as the preferred Levanyl Black A-SF (Bayer), Sunsperse Carbon Black LHD 9303 (Sun Chemicals), other similar carbon black products available from Sun Chemicals, and other similar carbon black products available from Cabot Corporation. The color pigments may be selected in a dry powder form, in a predispersed form, and the like. Illustrative examples of magenta pigments include 2,9-dimethyl-substituted quinacridone and anthraquinone, identified in the Color Index as CI 60710, CI Dispersed Red 15, CI Solvent Red 19, and the like. Illustrative examples of suitable cyan pigments include copper tetra-4-(octadecyl sulfonamido) phthalocyanine, X-copper phthalocyanine pigment, listed in the Color Index as CI 74160, CI Pigment Blue, and Anthrathrene Blue, identified in the Color Index as CI 69810, Special Blue X-2137, and the like. Illustrative examples of yellow pigments that can be selected include diarylide yellow 3,3-dichlorobenzidene acetoacetanilides, a monoazo pigment identified in the Color Index as CI 12700, CI Solvent Yellow 16, a nitrophenyl amine sulfonamide identified in the Color Index as Foron Yellow SE/GLN, CI Dispersed Yellow 33, 2,5-dimethoxy-4-sulfonanilide phenylazo-4'-chloro-2,5-dimethoxy acetoacetanilide, Permanent Yellow FGL, and the like. Additional examples of pigments include Normandy Magenta RD-2400 (Paul Uhlich), Sunsperse Quindo Magenta QHD 6040 (Sun Chemicals), Paliogen Violet 5100 (BASF), Paliogen Violet 5890 (BASF), Permanent Violet VT2645 (Paul Uhlich), Heliogen Green L8730 (BASF), Argyle Green XP-111-S (Paul Uhlich), Brilliant Green Toner GR 0991 (Paul Uhlich), Heliogen Blue L6900, L7020 (BASF), Heliogen Blue D6840, D7080 (BASF), Sudan Blue OS (BASF), PV Fast Blue B2G01 (American Hoechst), Sunsperse Blue BHD 6000 (Sun Chemicals), Irgalite Blue BCA (Ciba-Geigy), Paliogen Blue 6470 (BASF), Sudan III (Matheson, Coleman, Bell), Sudan II (Matheson, Coleman, Bell), Sudan IV (Matheson, Coleman, Bell), Sudan Orange G (Aldrich), Sudan Orange 220 (BASF), Paliogen Orange 3040 (BASF), Ortho Orange OR 2673 (Paul Uhlich), Paliogen Yellow 152, 1560 (BASF), Lithol Fast Yellow 0991K (BASF), Paliotol Yellow 1840 (BASF), Novoperm Yellow FG 1 (Hoechst), Permanent Yellow YE 0305 (Paul Uhlich), Lumogen Yellow D0790 (BASF), Sunsperse Yellow YHD 6001 (Sun Chemicals), Suco-Gelb L1250 (BASF), Suco-Yellow D1355 (BASF), Hostaperm Pink E (American Hoechst), Fanal Pink D4830 (BASF), Cinquasia Magenta (DuPont), Lithol Scarlet D3700 (BASF), Toluidine Red (Aldrich), Scarlet for Thermoplast NSD PS PA (Ugine Kuhlmann of Canada), E. D. Toluidine Red (Aldrich), Lithol Rubine Toner (Paul Uhlich), Lithol Scarlet 4440 (BASF), Bon Red C (Dominion Color Company), Royal Brilliant Red RD-8192 (Paul Uhlich), Oracet Pink RF (Ciba-Geigy), Paliogen Red 3871K (BASF), Paliogen Red 3340 (BASF), and Lithol Fast Scarlet L4300 (BASF).

Preferably, in embodiments of the present invention when pigments are selected, the pigment particle size is as small as possible to enable a stable dispersion of the particles in the presence of the resin emulsion. Preferred particle average diameters are generally from about 0.001 to about 1 micrometer. The pigments may be further processed to obtain a preferred desired particle size of, for example, from about 0.001 to about 1 micron. The aforementioned further processing includes the use of a ball mill, a sand mixer, an attritor, an agitator mill, an ultrasonic homogenizer, a microfluidizer, or centrifugation.

Dyes, while not necessarily preferred may, it is believed, be optionally selected for the ink jet inks of the present invention, examples of which include any suitable commercially available dyes. The dyes selected may be acid, direct or reactive dyes. Specific examples of dyes include Bernacid Red 2BMN, Pontamine Brilliant Bond Blue A, BASF X-34, Pontamine, Food Black 2, Carodirect Turquoise FBL Supra Conc. (Direct Blue 199, Carolina Color and Chemical), Special Fast Turquoise 8GL Liquid (Direct Blue 86, Mobay Chemical), Intrabond Liquid Turquoise GLL (Direct Blue 86, Crompton and Knowles), Cibracron Brilliant Red 38-A (Reactive Red 4, Aldrich Chemical), Drimarene Brilliant Red X-2B (Reactive Red 56, Pylam, Inc.), Levafix Brilliant Red E-4B (Mobay Chemical), Levafix Brilliant Red E-6BA (Mobay Chemical), Pylam Certified D&C Red #28 (Acid Red 92, Pylam), Direct Brill Pink B Ground Crude (Crompton & Knowles), Cartasol Yellow GTF Presscake (Sandoz, Inc.), Tartrazine Extra Conc. (FD&C Yellow #5, Acid Yellow 23, Sandoz), Carodirect Yellow RL (Direct Yellow 86, Carolina Color and Chemical), Cartasol Yellow GTF Liquid Special 110 (Sandoz, Inc.), D&C Yellow #10 (Acid Yellow 3, Tricon), Yellow Shade 16948 (Tricon), Basacid Black X34 (BASF), Carta Black 2GT (Sandoz, Inc.), Neozapon Red 492 (BASF), Orasol Red G (Ciba-Geigy), Direct Brilliant Pink B (Crompton-Knolls), Aizen Spilon Red C-BH (Hodogaya Chemical Company), Kayanol Red 3BL (Nippon Kayaku Company), Levanol Brilliant Red 3BW (Mobay Chemical Company), Levaderm Lemon Yellow (Mobay Chemical Company), Spirit Fast Yellow 3G, Aizen Spilon Yellow C-GNH (Hodogaya Chemical Company), Sirius Supra Yellow GD 167, Cartasol Brilliant Yellow 4GF (Sandoz), Pergasol Yellow CGP (Ciba-Geigy), Orasol Black RL (Ciba-Geigy), Orasol Black RLP (Ciba-Geigy), Savinyl Black RLS (Sandoz), Dermacarbon 2GT (Sandoz), Pyrazol Black BG (ICI), Morfast Black Conc A (Morton-Thiokol), Diazol Black RN Quad (ICI), Orasol Blue GN (Ciba-Geigy), Savinyl Blue GLS (Sandoz), Luxol Blue MBSN (Morton-Thiokol), Sevron Blue 5GMF (ICI), and Basacid Blue 750 (BASF); Levafix Brilliant Yellow E-GA, Levafix Yellow E2RA, Levafix Black EB, Levafix Black E-2G, Levafix Black P-36A, Levafix Black PN-L, Levafix Brilliant Red E6BA, and Levafix Brilliant Blue EFFA, all available from Bayer; Procion Turquoise PA, Procion Turquoise HA, Procion Turquoise Ho5G, Procion Turquoise H-7G, Procion Red MX-5B, Procion Red H8B (Reactive Red 31), Procion Red MX 8B GNS, Procion Red G, Procion Yellow MX-8G, Procion Black H-EXL, Procion Black P-N, Procion Blue MX-R, Procion Blue MX-4GD, Procion Blue MX-G, and Procion Blue MX-2GN, all available from ICI; Cibacron Red F-B, Cibacron Black BG, Lanasol Black B, Lanasol Red 5B, Lanasol Red B, and Lanasol Yellow 46, all available from Ciba-Geigy; Baslien Black P-BR, Baslien Yellow EG, Baslien Brilliant Yellow P-3GN, Baslien Yellow M-6GD, Baslien Brilliant Red P-3B, Baslien Scarlet E-2G, Baslien Red E-B, Baslien Red E-7B, Baslien Red M-5B, Baslien Blue E-R, Baslien Brilliant Blue P-3R, Baslien Black P-BR, Baslien Turquoise Blue P-GR, Baslien Turquoise M-2G, Baslien Turquoise E-G, and Baslien Green E-6B, all available from BASF; Sumifix Turquoise Blue G, Sumifix Turquoise Blue H-GF, Sumifix Black B, Sumifix Black H-BG, Sumifix Yellow 2GC, Sumifix Supra Scarlet 2GF, and Sumifix Brilliant Red 5BF, all available from Sumitomo Chemical Company; Intracron Yellow C-8G, Intracron Red C-8B, Intracron Turquoise Blue GE, Intracron Turquoise HA, and Intracron Black RL, all available from Crompton and Knowles, Dyes and Chemicals Division; Acid Yellow 17, Acid Red 52, and Direct Red 227, all available from Tricon; Projet Cyan 1, Projet Magenta 1T, and Projet Yellow 1G, all available from Zeneca; mixtures thereof, and the like. Dyes that are invisible to the naked eye but detectable when exposed to radiation outside the visible wavelength range (such as ultraviolet or infrared radiation), such as dansyl-lysine, N-(2-aminoethyl)-4-amino-3,6-disulfo-1,8-dinaphthalimide dipotassium salt, N-(2-aminopentyl)-4-amino-3,6-disulfo-1,8-dinaphtha-limide dipotassium salt, Cascade Blue ethylenediamine trisodium salt (available from Molecular Proes, Inc.), Cascade Blue cadaverine trisodium salt (available from Molecular Proes, Inc.), bisdiazinyl derivatives of 4,4'-diaminostilbene-2,2'-disulfonic acid, amide derivatives of 4,4'-diaminostilbene-2,2'-disulfonic acid, phenylurea derivatives of 4,4'-disubstituted stilbene-2,2'-disulfonic acid, mono- or dinaphthyltriazole derivatives of 4,4'-disubstituted stilbene disulfonic acid, derivatives of benzithiazole, derivatives of benzoxazole, derivatives of benzimidazole, derivatives of coumarin, derivatives of pyrazolines containing sulfonic acid groups, 4,4'-bis(triazin-2-ylamino)stilbene-2,2'-disulfonic acids, 2-(stilben-4-yl)naphthotriazoles, 2-(4-phenylstilben-4-yl)benzoxazoles, 4,4-bis(triazo-2-yl)stilbene-2,2'-disulfonic acids, 1,4-bis(styryl)biphenyls, 1,3-diphenyl-2-pyrazolines, bis(benzazol-2-yl) derivatives, 3-phenyl-7-(triazin-2-yl)coumarins, carbostyrils, naphthalimides, 3,7-diaminodibenzothiophen-2,8-disulfonic acid-5,5-dioxide, other commercially available materials, such as C.I. Fluorescent Brightener No. 28 (C.I. 40622), the fluorescent series Leucophor B-302, BMB (C.I. 290), BCR, BS (available from Leucophor), and the like. Mixtures of dyes and pigments may also be selected.

Furthermore, in embodiments of the present invention, the ink jet ink compositions may include magnetic particles, for example, to enable the use of the ink jet ink compositions in a magnetic ink character reader (MICR) system. Suitable magnetic substances include, but are not limited to needle-shaped magnetic substances, doped magnetic substances and heat-treated magnetic substances. For example, the compositions of the particular magnetic substances may include heat-treated magnetite, co-doped magnetite, needle magnetite and magnetite. Other suitable magnetic substances include, but are not limited to ferromagnetic compounds including hard magnetic particles, sort magnetic particles, or a mixture of hard and sort magnetic particles. The magnetically sort particles can be iron or another high-permeability, low-remanence material, such as iron carbonyl, certain of the ferrites, for example zinc or manganese ferrite, or permalloys. The magnetically hard particles can be iron oxide, other ferrites, for example, barium ferrite, chi-iron carbide, chromium dioxide or alloys of iron oxide and nickel or cobalt. When such magnetic particles are included in the ink jet ink compositions, they may be present in any effective amount, and are preferably of a particle size such that the jetting characteristics of the ink are not adversely affected.

The inks of the present invention can be prepared by the simple mixing of the resin emulsion, colorant, such as pigment, ink vehicle and known ink additives, such as biocides, humectants, buffers, penetrants, and the like, and more specifically, by dissolving ink additives, such as anticurl agents, in an amount, for example, of from about 0.1 to 10 weight percent, water, cosolvents, such as Sulfolane, in an amount, for example, of from about 15 to about 25 weight percent and agitating to obtain a homogeneous mixture, and which agitating is for an effective period of time, for example from about 5 to about 10 minutes. To the resulting mixture there is added the resin emulsion containing, for example, from about 0.5 to about 2 weight percent of resin, followed by stirring for from about 5 to about 10 minutes, or other effective time period. This resulting mixture can then be added to a stirring pigment, and wherein stirring can be accomplished by any agitation device, such as a stir bar for about 5 to about 10 minutes. The resultant ink can be filtered through a suitable filter, such as a 1 µm glass fiber filter, primarily to remove contaminants or large particles (>1 µm) from the ink mixture.

The liquid vehicle of the inks of the present invention may be comprised of water, or water and a miscible organic component, or cosolvent. Examples of suitable cosolvents include, but are not limited to glycols, such as ethylene glycol, propylene glycol, diethylene glycols, triethylene glycols, thioglycol, glycerine, dipropylene glycols, polyethylene glycols, polypropylene glycols, amides such as urea and substituted ureas, ethers such as ethylene glycolmonomethyl ether, ethylene glycolmonoethyl ether, diethyleen glycolmonomethyl ether, diethylene glycolmonoethyl ether, diethylene glycolmonobutyl ether, propylene glycolmonomethyl ether, propylene glycolmonomethyl ether, propylene glycolmonobutyl ether, triethylene glycol ether, tripropylene glycol monomethyl ether, carboxylic acids and their salts, esters, alcohols such as ethyl alcohol, isopropyl alcohol, butyl alcohol, and benzyl alcohol, organosulfides, organosulfoxides, sulfones such as Sulfolane, alcohol derivatives, carbitol, butyl carbitol, cellusolve, ether derivatives, amino alcohols, ketones, N-methylpyrrolidinone, 2-pyrrolidone, cyclohexyl-pyrrolidone, hydroxyethers, amides, sulfoxides such as dimethyl sulfoxide, lactones, mixtures thereof and the like.

When mixtures of water and one or more cosolvents or codispersants are selected as the liquid vehicle, the ratio of water to cosolvent may be in any effective range. Typically, the ratio of water to cosolvent is from about 100:0 to about 20:70, and preferably from about 97:3 to about 50:50, although other suitable ratios may be selected. The non-water component of the liquid vehicle, when present, generally functions as a humectant, which typically has a boiling point higher than that of water. For example, suitable humectants include, but are not limited to glycols, N-methylpyrrolidone, 2-pyrrolidone, N-methyl-2-pyrrolidone, 1,2-dimethyl-2-imidazolidinone, Sulfolane, mixtures thereof and the like. Humectants may be included in the ink to prevent water evaporation and sedimentation. Additionally, certain humectants, such as N-methyl-pyrrolidone and 2-pyrrolidone, have been found to improve jetting performance in the ink and thus serve the dual role as humectant and cosolvent. In addition, some humectants, such as 2-pyrrolidone resist ink, build up on jet faces during extended printing, which is preferred for cartridge refillability.

Other components may also be incorporated into the inks of the present invention as indicated hereinbefore. For example, the inks of the present invention may include such additives as biocides, buffering agents, anti-mold agents, pH adjustment agents, electric conductivity adjustment agents, chelating agents, anti-rusting agents, stabilizing agents and the like. These additives may be included in the ink jet inks of the present invention in any effective amount, such as for example from about 0.0001 to about 4.0 percent by weight, and preferably from about 0.01 to about 2.0 percent by weight of the ink.

Examples of buffering agents include, but are not limited to sodium borate, sodium hydrogen phosphate, sodium dihydrogen phosphate, mixtures thereof and the like. Examples of biocides include, but are not limited to Dowicil™, Proxel, benzoate salts, sorbate salts, mixtures thereof, and the like.

Ph controlling agents may also be included in the inks. Examples of such pH controlling agents invention include, but are not limited to acids; bases, including hydroxides of alkali metals, such as lithium hydroxide, sodium hydroxide and potassium hydroxide; phosphate salts; carbonate salts; carboxylate salts; sulfite salts; amine salts; amines, such as diethanolamine and triethanolamine; mixtures thereof and the like. When present, the pH controlling agent is preferably included in an amount of up to about 3 percent by weight, and preferably from about 0.01 to about 1 percent by weight.

Other ink additives may also be selected. For example components such as, trimethylol propane may be added to the ink jet ink compositions, for example, to reduce paper curl or as an anti-cockle agent. Examples of suitable additives are disclosed, for example, in U.S. Patent 4,737,190, the entire disclosure of which is incorporated herein by reference.

For the final ink jet ink compositions of the present invention, a number of physical properties may be desirable, for example ink compositions for use in ink jet recording processes should have appropriate viscosity, surface tension and pH characteristics. In the present invention, it is preferred that the ink jet ink composition possess a viscosity of from about 0.5 to about 20 cP at 25°C. Preferably, the ink viscosity is from about 1 to about 15 cP, and more preferably from about 1 to about 7 cP. It is also preferred that the ink jet ink composition possess a surface tension of from about 10 to about 75 dynes/cm at 25°C. More preferably, the surface tension of the ink is from about 20 to about 55 dynes/cm, and preferably from about 25 to about 45 dynes/cm. It is also preferred that the ink jet ink composition possess a pH of from about 3 to about 10, and more preferably from about 4 to about 8.

The inks of the present invention possess superior ink stability, for example they maintain a substantially constant viscosity as measured by a Brookfield Fluid Rheometer, a suitable pH as measured by a pH electrode and meter, and an effective surface tension as measured by a fluid tensiometer. Moreover, the inks do not exhibit visible pigment or emulsion particle settling behavior for extended time periods, for example over six months, and more specifically, from about six months to about two years.

The substantially constant viscosity, pH, surface tension, and lack of particulate settling is maintained despite stressing the ink by, for example, permitting the ink to remain in a bottle at room temperature, for example about 25°C, then subjecting the ink to heating at about 60°C (degrees Centigrade) for 24 hours or 50°C for 30 days; or subjecting the ink to freezing at -30°C followed by thawing at room temperature. Under these stress conditions, the viscosity of the ink does not substantially increase or decrease more than about 0.5 cPs (centipoise). A substantial viscosity change, for example from 3 centipoise (cPs) to about 4 centipoise, may cause the ink to be nonjettable, and/or may render the ink incapable of passing through the jetting device filter. An adverse change in ink viscosity may result in the lack of refilling ink to the jetting device, and thus subsequent loss of jetting channel refill and drops not being fired from the jetting device. Subjecting the inks to temperatures below about 0 degrees Celsius, such as -40°C, and thereafter thawing the inks, an extreme condition which may occur during transportation of the ink in winter, or cold climates, evidenced no visible ink settling or precipitate of the ink, such as the pigment, the resin emulsion particles, and pigment with other ink components. Visible settling or precipitates, after the ink has remained at 25°C, would cause ink jet nozzle clogging, and therefore, effect the line edge raggedness, optical density, or mottle of the images. Also, the settling of the ink would permit a nonhomogeneous mixture which may also cause storage problems such as in an ink tank containing a wicking device. Further, the inks of the present invention do not require additional special additives, such as the prior art saccharine/polyols, for long shelf stability or excellent jetting performance.

As evidence of the absence of ink interaction, fluid rheology is used with a Rheometrics RSF. The viscosity in centipoise is measured versus a change in shear rate and typically plotted as log of shear rate (sec-1). Inks were measured over a range of log shear rate (sec-1) of 0.5 to 3. The inks of the present invention evidenced no significant viscosity decrease with increasing shear rate, indicating the lack of association of the colorant, especially pigment and resin emulsion particles, and spacing between the resin and pigment. Moreover, as shear rate was decreased from 10³ to 10⁰, the ink viscosity followed the same curve as was the situation with regard to the aforementioned shear rate increase, which is a further indication of the absence of association of pigment, and resin emulsion particles in the ink.

Inks of the prior art evidence association between the pigment particles and the resin emulsion particles. The resin emulsion particles and pigments are typically coalesced with heat and/or with oppositely charged ionic surfactant, which is closely associated with the pigment and resin emulsion particles, and causes, for example, undesirable settling of the ink particles. In Comparative Example 3, the ink had a moderate amount of shear thinning (3.7 to 3.4 centipoise over log shear rate of 0.5 to 2), and this ink was initially stable, (little settling) for about two months, however, the ink settled thereafter, for example after about 3 months. In contrast, the invention inks are stable for over one year, and evidence virtually no shear thinning, and show little shift within noise of about 0.1 centipoise of viscosity versus a log shear rate of 2 to 0.5.

The performance of the invention inks on paper, that is when the vehicle is significantly removed, shows interactions which are absent while in the ink. Atomic Force Microscope and scanning electron microscopy pictures provides physical evidence of this interaction on paper. In the absence of resin emulsion particles, the pigment particles are predominantly present as single particles. When the resin emulsion particles are present, the pigment particles are seen as large agglomerates with the resin emulsion particles at the center of the agglomerate grouping.

Thermal ink jet inks containing pigments and resin emulsion particles with a lack of pigment/resin emulsion particle association in the ink and the physically bound pigment/resin emulsion particle association on the paper is of importance with respect to the inks and processes of the present invention.

The invention will now be described in detail with reference to specific preferred embodiments thereof, it being understood that these examples are intended to be illustrative only. All parts and percentages are by weight unless otherwise indicated.

### EXAMPLE 1

### Preparation of Resin Emulsion:

A resin emulsion comprised of methyl methacrylate/butyl acrylate/acrylic acid terpolymer of 60:30:10 composition was prepared by a batch emulsion polymerization process. In a 500 milliliter jacketed glass flask with a stirrer set at 200 rpm, 1.8 grams of ammonium persulfate, 1.8 grams of sodium dodecylbenzene sulfonate (Aldrich), 1.8 grams of Triton X-100 (octylphenol polyether alcohol, Union Carbide), and 232 grams of deionized water were deaerated for 30 minutes. A monomer mixture of 72 grams of methyl methacrylate, 36 grams of n-butyl acrylate, and 12 grams of acrylic acid was charged into the flask and was emulsified for 10 minutes at room temperature, about 25°C throughout. The emulsion was then polymerized at 80°C for 5.5 hours in a nitrogen atmosphere. A resin emulsion containing 34 percent solids comprised mainly of ionic emulsion particles with residual emulsifiers, ionic and nonionic surfactants, residual initiator with an average particle size of 235 nanometers, as measured by Coulter N4, was obtained. The resulting resin had a rescan midpoint Tg of 53°C (Centigrade) as determined by Seiko DSC. Bulk resin molecular weight M_{w} of 583,000 was determined on a Waters GPC. There was about 4 weight percent of water soluble oligomer/polymer in the aqueous media (the oligomer/polymer mentioned) comprised of 73 weight percent of acrylic acid, as determined by centrifugation and acid titration. The aqueous phase oligomer and polymer possessed an M_{w} of 1,080 and 28,000, respectively.

The inks with Levanyl Carbon Black Dispersion (obtained from Bayer Corporation) were, after preparation, centrifuged to remove large (>1 µm) particles. The carbon black dispersion was filtered through a 1 µm glass fiber filter prior to making inks. All Examples herein utilize the preprocessed Levanyl carbon black unless otherwise indicated.

### EXAMPLE 1A

### Preparation of Ink:

A black colored ink jet ink composition was prepared by mixing 16 weight percent of diethylene glycol (obtained from Aldrich), 15 weight percent of 2-pyrrolidinone (obtained from Aldrich), and water (ink balance to total 100 percent). The vehicle resulting and the resin emulsion of Example 1, about 0.55 percent solids equivalent, were added to the vehicle mixture and stirred for about 5 to 10 minutes. The resultant mixture was added to the Levanyl Carbon black dispersion (obtained from Bayer Corporation), 7 weight percent. The ink mixture was stirred for about 5 minutes. The ink mixture was filtered through a 1 µm glass fiber filter. The ink was shown to be stable through viscosity, surface tension, pH properties after heating at 50°C for 30 days and 60°C for 24 hours. The ink was also shelf stable, for about 12 months, at about 25°C with no signs of settling or precipitates.

### EXAMPLE 1B

### Preparation of Ink:

A black colored ink jet ink composition was prepared by mixing 20 weight percent of Sulfolane (obtained from Bayer), 4 weight percent of trimethylolpropane (obtained from Hoescht), and water (ink balance to total 100 percent). The resin emulsion of Example 1, about 0.55 percent solids equivalent, was added to the prepared vehicle mixture and stirred for about 5 to 10 minutes. The resultant mixture was added to Levanyl Carbon black dispersion (obtained from Bayer Corporation), 7 weight percent. The ink mixture was stirred for about 5 minutes. The ink mixture was filtered through a 1 µm glass fiber filter. The ink was shown to possess stability, as indicated by the same, or similar viscosity, surface tension, and pH properties after heating the ink at 50°C for 30 days and 60°C for 24 hours. The ink was also shelf stable at about 25°C with no signs of settling or precipitates, for 12 months.

### EXAMPLE 1C

### Preparation of Ink:

A black colored ink jet ink composition was prepared by mixing 20 weight percent of Sulfolane (obtained from BASF), 0.5 weight percent of a polyethylene oxide/bisphenol A polymer with a molecular weight of 18,000 (obtained from Polysciences), and the water were stirred to obtain a homogeneous mixture, and which stirring was for about 5 to 10 minutes. To the resulting ink vehicle, the resin emulsion of Example I, about 1 percent solids equivalent, was added and stirred for about 5 to 10 minutes. The resultant mixture was added to Cabojet 200 carbon black colorant (Cabot Corporation), 4 weight percent. The ink mixture was stirred for 5 to about 10 minutes. The ink mixture was filtered through a 1 µm glass fiber filter. This ink was shelf stable with no signs of settling for 6 months standing at about 25°C. The physical ink properties, such as viscosity, remained constant at about 2.15 centipoise.

### EXAMPLE 2

### Preparation of Resin Emulsion:

A resin emulsion comprised of methyl methacrylate/butyl acrylate/acrylic acid terpolymer of 67:30:3 composition was prepared by a batch emulsion polymerization process. In a 2 liter jacketed glass flask with a stirrer set at 250 rpm, 3 grams of ammonium persulfate, 4.5 grams of sodium dodecyl sulfate (Aldrich), and 580 grams of deionized water were deaerated for 30 minutes. A monomer mixture of 201 grams of methyl methacrylate, 30 grams of n-butyl acrylate, and 9 grams of acrylic acid were charged into the flask and the flask contents were then emulsified for 10 minutes at room temperature. The resulting emulsion was then polymerized at 80°C for 5.5 hours in a nitrogen atmosphere. A resin emulsion containing 34 percent solids with an average particle size of 80 nanometers, as measured by Coulter N4, was obtained. The resulting resin had a rescan midpoint Tg of 55°C as determined by Seiko DSC, and a bulk molecular weight M_{w} of 1,090,000 as determined on Waters GPC.

### EXAMPLE 2A

### Preparation of Ink:

A black colored ink jet ink composition was prepared by mixing 20 weight percent of Sulfolane (obtained from BASF), trimethyolpropane (obtained from Hoechst), and water (ink balance to total 100 percent). The resin emulsion of Example 2, about 0.55 percent solids equivalent, was added to the vehicle mixture and the resulting mixture was stirred for about 5 to 10 minutes. The resultant mixture was then added to a Levanyl Carbon black dispersion (obtained from Bayer Corporation), 7 weight percent. The ink mixture was stirred for about 5 minutes. Thereafter, the resulting ink mixture was filtered through a 1 µm glass fiber filter. This ink evidenced no signs of settling for 12 months at about 25°C.

### EXAMPLE 3

### Preparation of Resin Emulsion:

A resin emulsion comprised of methyl methacrylate/butyl methacrylate/acrylic acid terpolymer of 21:76:3 composition was prepared by a batch emulsion polymerization process. In a 2 liter jacketed glass flask with a stirrer set at 250 rpm, 1.5 grams of ammonium persulfate, 17.8 grams of sodium dodecylbenzene sulfonate (Aldrich), and 580 grams of deionized water were deaerated for 30 minutes. A monomer mixture of 62 grams of methyl methacrylate, 229 grams of n-butyl methacrylate, and 9 grams of acrylic acid was charged into the flask and the mixture was then emulsified for 10 minutes at room temperature. The emulsion was then polymerized at 80°C for 5.5 hours in a nitrogen atmosphere. A resin emulsion containing 36 percent solids with an average particle size of 63 nanometers, as measured by Coulter N4, was obtained. The resulting resin had a rescan midpoint Tg of 54°C as determined by Seiko DSC, and the bulk resin molecular weight M_{w} was 2,280,000 as determined on Waters GPC.

### EXAMPLE 3A:

### Preparation of Ink:

A black colored ink jet ink composition was prepared by mixing 20 weight percent of Sulfolane (obtained from BASF), trimethyolpropane (obtained from Hoechst), and water (ink balance to total 100 percent). The resin emulsion of Example 3, about 0.55 percent solids equivalent, was added to the prepared vehicle mixture and stirred for about 5 to 10 minutes. The resultant mixture was added to Levanyl Carbon black dispersion (obtained from Bayer Corporation), 7 weight percent. The ink mixture was stirred for about 5 minutes. The ink mixture was filtered through a 1 µm glass fiber filter. This ink did not evidence any settling for 18 months at about 25°C.

### EXAMPLE 4

### Preparation of Resin Emulsion:

A resin emulsion comprised of methyl methacrylate/butyl acrylate/methacrylic acid terpolymer of 50:30:20 composition was prepared by a batch emulsion polymerization process. In a 500 milliliter jacketed glass flask with a stirrer set at 200 rpm, 0.6 gram of ammonium persulfate, 1.8 grams of sodium dodecylbenzene sulfonate (Aldrich), 1.8 grams of Triton X-100 (octylphenol polyether alcohol, Union Carbide), and 232 grams of deionized water were deaerated for 30 minutes. A monomer mixture of 60 grams of methyl methacrylate, 36 grams of n-butyl acrylate, and 24 grams of methacrylic acid was charged into the flask and was emulsified for 10 minutes at room temperature. The emulsion was then polymerized at 80°C for 5.5 hours in a nitrogen atmosphere. A latex containing 36 percent solids with an average particle size of 94 nanometers, as measured by Coulter N4, was obtained. The resulting resin had a rescan midpoint Tg of 95°C as determined by Seiko DSC. Bulk molecular weight M_{w} of the resin was 1,190,000 as determined on Waters GPC.

### EXAMPLE 4A

### Preparation of Ink:

A black colored ink jet ink composition was prepared by generating an ink vehicle by mixing 20 weight percent of Sulfolane (obtained from BASF), trimethyolpropane (obtained from Hoechst), and water (ink balance to total 100 percent). The emulsion polymerization mixture of Example 4, about 0.55 percent solids equivalent, was added to the vehicle mixture and stirred for about 5 to 10 minutes. The resultant mixture was added to Levanyl Carbon black dispersion (obtained from Bayer Corporation), 7 weight percent. The ink mixture was stirred for about 5 minutes, and then the ink mixture was filtered through a 1 µm glass fiber filter. This ink exhibited no settling or precipitates for 12 months at 25°C.

### EXAMPLE 5

### Preparation of Polymer Latex Emulsion:

A resin emulsion comprised of methyl methacrylate/butyl acrylate/acrylic acid terpolymer of 67:30:3 composition was prepared by a batch emulsion polymerization process. In a 500 milliliter jacketed glass flask with a stirrer set at 200 rpm, 0.6 gram of ammonium persulfate, 1.8 grams of sodium dodecylbenzene sulfonate (Aldrich), 1.8 grams of Triton X-100 (octylphenol polyether alcohol, Union Carbide), and 232 grams of deionized water were deaerated for 30 minutes. A monomer mixture of 80.4 grams of methyl methacrylate, 36 grams of n-butyl acrylate, and 3.6 grams of acrylic acid was charged into the flask and was emulsified for 10 minutes at room temperature. The emulsion was then polymerized at 80°C for 5.5 hours in a nitrogen atmosphere. A resin emulsion containing 34 percent solids with an average particle size of 75 nanometers, as measured by Coulter N4, was obtained. The resulting resin has a rescan midpoint Tg of 55°C as determined by Seiko DSC. Bulk molecular weight M_{w} of the resin was 1,630,000 as determined on Waters GPC. There was about 1.3 weight percent of water soluble oligomer/polymer in the aqueous media comprised of 60 weight percent of acrylic acid, as determined by centrifugation and acid titration. The aqueous phase oligomer and polymer had M_{w} of 1,480 and 60,000, respectively.

### EXAMPLE 5A

### Preparation of Ink:

A black colored ink jet ink composition was prepared by mixing a vehicle of 20 weight percent of a Sulfolane (obtained from BASF), trimethyolpropane (obtained from Hoechst), and water (ink balance to total 100 percent). The resin emulsion of Example 5, about 0.55 percent solids equivalent, was added to the vehicle mixture and stirred for about 5 to 10 minutes. The resultant mixture was added to Levanyl Carbon black dispersion (obtained from Bayer Corporation), 7 weight percent. The ink mixture was stirred for about 5 minutes. The ink mixture was filtered through a 1 µm glass fiber filter. The ink was shelf stable for about 3.5 months at room temperature, that is it remained at a viscosity of about 2.05 centipoise without settling or precipitates.

### EXAMPLE 6

### Preparation of Resin Emulsion:

A resin emulsion comprised of benzyl methacrylate/methacrylic acid terpolymer of 76:24 composition was prepared by a batch emulsion polymerization process. In a 500 milliliter jacketed glass flask with a stiffer set at 200 rpm, 1.8 grams of ammonium persulfate, 1.8 grams of sodium dodecylbenzene sulfonate (Aldrich), 1.8 grams of Triton X-100 (octylphenol polyether alcohol, Union Carbide), and 232 grams of deionized water were deaerated for 30 minutes. A monomer mixture of 91.2 grams of styrene, 28.8 grams of methacrylic acid, 2.4 grams of 1-dodecanethiol, and 1.2 grams of carbon tetrabromide was charged into the flask and was emulsified for 10 minutes at room temperature. The emulsion was then polymerized at 80°C for 5.5 hours in a nitrogen atmosphere. A resin emulsion containing 34 percent solids with an average particle size of 112 nanometers, as measured by Coulter N4, was obtained. The resulting resin had a rescan midpoint Tg of 108°C as determined by Seiko DSC. A bulk molecular weight M_{w} of about 1.4 weight percent of water soluble oligomer present in the aqueous media was determined by centrifugation. The aqueous phase oligomer had an M_{w} of 650.

### EXAMPLE 6A

### Preparation of Ink:

A black colored ink jet ink composition was prepared by mixing 21 weight percent of Sulfolane (obtained from BASF), 4.5 weight percent of Dowanol tripropylene glycol monomethyl ether (obtained from Dow Chemicals), and 0.5 weight percent of a polyethylene oxide/bisphenol-A polymer with a molecular weight of 18,000 (obtained from Polysciences), and water were stirred to obtain a homogeneous mixture for about 5 to 10 minutes. The resin emulsion of Example 6, about 0.55 percent solids equivalent, was added to the liquid vehicle mixture and stirred for about 5 to 10 minutes. The resultant mixture was added to Cabojet 300 carbon black colorant (Cabot Corporation), 4 weight percent. The ink mixture was stirred for about 5 to 10 minutes. The ink mixture was filtered through a 1 µm glass fiber filter. The ink was shelf stable for about 4 months at about 25°C with no viscosity changes (2.14 centipoise), no settling of solids of resin and pigment, and no precipitates.

### EXAMPLE 7

### Preparation of Resin Emulsion:

A resin emulsion comprised of styrene/methacrylic acid terpolymer of 76:24 composition was prepared by a batch emulsion polymerization process. In a 500 milliliter jacketed glass flask with a stirrer set at 200 rpm, 1.8 grams of ammonium persulfate, 1.8 grams of sodium dodecylbenzene sulfonate (Aldrich), 1.8 grams of Triton X-100 (octylphenol polyether alcohol, Union Carbide), and 232 grams of deionized water were deaerated for 30 minutes. A monomer mixture of 91.2 grams of styrene, 28.8 grams of methacrylic acid, 2.4 grams of 1-dodecanethiol, and 1.2 grams of carbon tetrabromide was charged into the flask and was emulsified for 10 minutes at room temperature. The emulsion was then polymerized at 80°C for 5.5 hours in a nitrogen atmosphere. A latex containing 37 percent solids with an average particle size of 112 nanometers, as measured by Coulter N4, was obtained. The resulting resin had a rescan midpoint Tg of 119°C as determined by Seiko DSC. Bulk molecular weight M_{w} of the resin was 29,700 as determined on Waters GPC.

### EXAMPLE 7A

### Preparation of Ink:

A black colored ink jet ink composition was prepared by mixing 21 weight percent of Sulfolane (obtained from BASF), 7 weight percent of 2-pyrrolidinone (obtained from Aldrich), and 0.5 weight percent of a polyethylene oxide/bisphenol A polymer with a molecular weight of 18,000 (obtained from Polysciences), and water were stirred to obtain a homogeneous mixture for about 5 to 10 minutes. The resin emulsion of Example 7, about 1 percent solids equivalent, was added to the liquid vehicle mixture and stirred for about 5 to 10 minutes. The resultant mixture was added to Cabojet 300 carbon black colorant (Cabot Corporation), 4 weight percent. The ink mixture was stirred for 5 to about 10 minutes. The ink mixture was filtered through a 1 µm glass fiber filter. The ink was shelf stable for about 4 months at about 25°C with no signs of viscosity changes, about 2.30 centipoise, no settling solids of resin, or pigment, and no precipitates.

### COMPARATIVE EXAMPLE 1

### Preparation of Ink:

A black colored ink jet ink composition was prepared by mixing 21 weight percent of Sulfolane (obtained from BASF), and 0.5 weight percent of a polyethylene oxide/bisphenol A polymer with a molecular weight of 18,000 (obtained from Polysciences), and water, followed by stirring for 5 to 10 minutes to obtain a homogeneous mixture. The resultant mixture was added to Cabojet 300 carbon black colorant (Cabot Corporation), 4 weight percent. The ink mixture was stirred for 5 to about 10 minutes. The ink mixture was then filtered through a 1 µm glass fiber filter.

### COMPARATIVE EXAMPLE 2

### Preparation of Ink:

A black colored ink jet ink composition was prepared by mixing 20 weight percent of Sulfolane (obtained from BASF), trimethyolpropane (obtained from Hoechst), and water (ink balance to total 100 percent). The resultant mixture was added to Levanyl Carbon black dispersion (obtained from Bayer Corporation), 7 weight percent. The ink mixture was stirred for about 5 minutes. The ink mixture was filtered through a 1 µm glass fiber filter.

### COMPARATIVE EXAMPLE 3

### Preparation of Resin Emulsion:

A resin emulsion comprised of methyl methacrylate/butyl acrylate/acrylic acid terpolymer of 60:30:10 composition was prepared by a batch emulsion polymerization process. In a 500 milliliter jacketed glass flask with a stirrer set at 200 rpm, 0.4 gram of ammonium persulfate, 1.5 grams of sodium dodecylbenzene sulfonate (Aldrich), 1.5 grams of Triton X-100 (octylphenol polyether alcohol, Union Carbide), and 250 grams of deionized water were deaerated for 30 minutes. A monomer mixture of 48 grams of methyl methacrylate, 24 grams of n-butyl acrylate, and 8 grams of acrylic acid was charged into the flask and was emulsified for 10 minutes at room temperature. The emulsion was then polymerized at 80°C for 5.5 hours in a nitrogen atmosphere. A resin emulsion containing 24 percent solids with an average particle size of 75 nanometers, as measured by Coulter N4, was obtained. The resulting resin had a rescan midpoint Tg of 57°C as determined by Seiko DSC. Bulk molecular weight M_{w} of the resin was 1,890,000 as determined on Waters GPC. There was about 3 weight percent of water soluble oligomer/polymer in the aqueous media comprised of 50 weight percent of acrylic acid, as determined by centrifugation and acid titration. The aqueous phase oligomer and polymer was of an M_{w} of 12,200 and 673,000, respectively.

### COMPARATIVE EXAMPLE 3

### Preparation of Ink:

A black colored ink jet ink composition was prepared by mixing 20 weight percent of Sulfolane (obtained from BASF), trimethyolpropane (obtained from Hoechst), and water (ink balance to total 100 percent). The resin emulsion of Example 3, about 0.55 percent solids equivalent, was added to the vehicle mixture and stirred for about 5 to 10 minutes. The resultant mixture was added to Levanyl Carbon black dispersion (obtained from Bayer Corporation), 7 weight percent. The ink mixture was stirred for about 5 minutes. The ink mixture was then filtered through a 1 µm glass fiber filter.

### COMPARATIVE EXAMPLE 4

### Preparation of Resin Emulsion:

A resin emulsion comprised of methyl methacrylate/butyl acrylate/acrylic acid terpolymer of 60:30:10 composition was prepared through a batch emulsion polymerization process. In a 500 milliliter round bottom glass flask with a stirrer set at 200 rpm, 1.5 grams of sodium dodecylbenzene sulfonate (Aldrich) were charged to the reactor. 50 Grams of water were added to solubilize the surfactant. Then 1.5 grams of Triton X-100 (octylphenol polyether alcohol, Union Carbide), and 30 grams of deionized water were added. An additional 30 grams of water were added. The 0.4 gram of ammonium persulfate initiator was dissolved in 30 grams of water and the resulting mixture was charged into the flask. A monomer mixture of 48 grams of methyl methacrylate and 24 grams of n-butyl acrylate was then charged to the flask. The reaction flask was heated to about 55°C, when 110 grams of water were added. Then 20 grams of water and 8 grams of acrylic acid were charged into the flask. The emulsion was then polymerized at 80°C for 3 hours in an argon atmosphere. A latex containing 24 percent solids with an average particle size of 82 nanometers, as measured by Nicomp, was obtained. The resulting resin had a rescan midpoint Tg of 55°C as determined by Seiko DSC.

### COMPARATIVE EXAMPLE 4

### Preparation of Ink:

The Levanyl Carbon Black dispersion, 5.6 weight percent was mixed with 40 grams of water and 0.17 gram of benzakonium chloride surfactant. The mixture was then agitated by a Turrax for 2 minutes at 10,000 rpm, while 5.76 weight percent of the resin emulsion in Example 4 was added. The mixture was roll milled for about 30 minutes. Thirty-five grams of this mixture were mixed into 5 weight percent of Sulfolane (obtained from BASF), and 1 weight percent of trimethyolpropane (obtained from Hoechst). The resultant ink mixture was roll milled for 30 minutes.

### EVALUATIONS

The properties of the above ink compositions were evaluated in the following manner:

### A)Physical Properties:

The viscosity of the ink was measured at 25°C using a Brookfield Model DV-11 viscometer.

The surface tension of the ink was measured at 25°C using a Kruss Model K10T plate tensiometer.

The pH was measured at 25°C using a Corning Model 345 pH meter.

### B)Smear resistance:

The images were placed in an ink jet printer HP850C (Hewlett Packard). After an image was printed, the image was allowed to stand, or remain at room temperature for 24 hours prior to evaluation. The optical density of the solid area was measured prior to smear testing using a densitometer (X-Rite 428). The images were printed on several media such as Xerox Courtland 4024DP and Image Series LX paper. A clean sheet of the matching paper was placed on top of the solid area image. Using a rub tester (Manufactured by Testing Machines Inc.), a 4 pound weight was placed on top of the covered image. At a speed of 85 rubs per minute, the image was subjected to 50 rubs at 25°C and 50 percent RH. The area adjacent to the solid area image was measured using the densitometer.

### C)Stability:

50 Grams of ink were placed in a capped bottle and allowed to stand at a temperature of 50°C. The ink physical properties were measured after heat treatment. For comparison, the shelf standing ink was also measured for physical, properties after 30 days. A second test to indicate stability was to place 50 grams of ink in a capped bottle and which ink was allowed to remain at a temperature of 60°C for 24 hours. The ink physical properties were measured after heat treatment. For comparison, the shelf standing ink was also measured for physical properties after 24 hours. A third test for stability was to subject the ink to temperatures below 0°C, such as -30 to -40°C, for 24 hours, and then the ink was allowed to thaw at room temperature. The ink physical properties were measured after treatment. For comparison, the shelf standing ink was also measured for physical properties after 24 hours. Large changes greater than 0.3 centipoise units for viscosity indicate instability. Observation for extended time periods, like up to 2 years, of the ink standing on the shelf at room temperature, about 25°C throughout, for settling were also tested.

### D)Soak Waterfastness:

An image was printed on a sheet of Image Series LX paper by an ink jet printer, HP855C. This sample was allowed to stand at room temperature for 24 hours, and then immersed in 100 milliliters of stirring water for 5 minutes. The change in the optical density value of the printed image before and after the immersion was determined by an X-Rite 428 densitometer.

### E)Optical Density:

An image was printed by an ink jet printer, HP855C on each of the following papers: Xerox Courtland 4024DP and Images Series LX. The optical density of the printed image was measured by an X-Rite densitometer.

| **Physical Properties for Stability Measured at 25**°**C** | | | | | | |
|---|---|---|---|---|---|---|
| | | | | **60°C/24 Hour Heat Treatment** | | |
| **Example** | **Viscosity cPs** | **Surface Tension D/cm** | **pH** | **Viscosity cPs** | **Surface Tension D/cm** | **pH** |
| 1A | 3.90 | 54 | 5.7 | 3.90 | 54 | 5.5 |
| 1B | 2.35 | 52 | 5.3 | 2.31 | 52 | 5.3 |
| 1C | 2.15 | 46 | 6.9 | 2.11 | 46 | 6.9 |
| 2A | 2.05 | 52 | 5.5 | 2.08 | 52 | 5.5 |
| 3A | 1.98 | 48 | 5.6 | 1.98 | 47 | 5.6 |
| 4A | 2.07 | 50 | 5.8 | 2.09 | 50 | 5.6 |
| 5A | 2.05 | 52 | 5.8 | 2.05 | - | - |
| 6A | 2.14 | 43 | 6.9 | 2.10 | 43 | 6.9 |
| 7A | 2.30 | 44 | 7.1 | 2.20 | 44 | 7.0 |
| Comparative 1 | 2.21 | 59 | 7.7 | 2.30 | 59 | 7.3 |
| Comparative 2 | 2.02 | 59 | 5.8 | 2.03 | 58 | 5.8 |
| Comparative 3 | 3.12 | 50 | 5.3 | 3.90 | 50 | 5.2 |
| Comparative 4 | 4.08 | 32 | 7.1 | settled | settled | settled |

**TABLE**

| | **Soak Waterfastness Percent** | **Optical Density** | | **Smear OD** | |
|---|---|---|---|---|---|
| **Example** | **Image Series LX** | **Xerox 4024DP** | **Image Series LX** | **Xerox 4024 DP** | **Image Series LX** |
| 1A | 100 | 1.27 | 1.37 | 0.09 | 0.12 |
| 1B | 100 | 1.25 | 1.37 | 0.05 | 0.16 |
| 1C | 100 | 1.45 | 1.49 | 0.07 | 0.10 |
| 2A | 100 | 1.25 | 1.38 | - | - |
| 3A | 100 | 1.3 | 1.38 | - | - |
| 4A | 100 | 1.24 | 1.40 | - | - |
| 6A | 100 | 1.51 | 1.55 | 0.04 | 0.05 |
| 7A | 100 | 1.47 | 1.58 | 0.08 | 0.11 |
| Comparative 1 | 95 | 1.4 | 1.45 | 0.13 | 0.14 |
| Comparative 2 | 97 | 1.17 | 1.28 | 0.15 | 0.30 |
| Comparative 3 | 99 | 1.31 | 1.38 | 0.14 | 0.28 |
| Comparative 4 | 99 | 0.97 | 0.98 | - | - |

### In the Physical Properties Table:

Comparative Example 1 is an ink with Cabot Carbon Black dispersion ink without the resin emulsion.

Comparative Example 2 is an ink with Levanyl Carbon Black dispersion ink without the resin emulsion

Comparative Example 3 - There is association overtime; the ink eventually exhibits settling after about 1 year at 25°C.

Comparative Example 4 - There is association immediately within 24 hours of making the ink.

### In the Second Table for Optical Density, etc:

Comparative Example 1 - The waterfastness is less; smear is higher.

Comparative Example 2 - The waterfastness is less; optical density is lower; and smear is significantly higher.

Both Examples are indicative of carbon black inks without the resin emulsion which exhibits inferior print quality atttributes. The corresponding invention Examples with the resin emulsion exemplifies superior print quality such as high waterfastness, higher optical density, and significantly lower smear.

Comparative Example 3 - The resin emulsion is present in the ink which aids in the increase in optical density, but the smear is significantly higher than the invention examples. In addition, settling occurs due to association as indicated in the first Table.

Comparative Example 4 - The optical density is significantly low.

Other modifications of the present invention may occur to those skilled in the art subsequent to a review of the present application and these modifications, including equivalents thereof, are intended to be included within the scope of the present invention.

## Claims

1. An ink composition comprised of (a) an ink vehicle, (b) resin emulsion, which emulsion contains resin particles, and (c) colorant, and wherein said resin particles and colorant are separated or dissociated.

2. The ink composition comprised of (a) an ink vehicle, (b) resin emulsion comprised of resin particles, and (c) colorant, and wherein the resin particles and colorant are separated or dissociated, and wherein the resin particles contain on the surface thereof ionic groups.

3. The ink composition in accordance with claim 2 wherein the ionic groups are carboxylic acid groups.

4. The ink composition in accordance with claim 2 or 3 wherein the carboxylic acid groups are present in an amount of from about 0.1 to about 40 weight percent in a continuous aqueous phase of water, and from about 1 to about 40 weight percent in the bulk of the resin particles.

5. The ink composition in accordance any of claims 2 to 4 wherein the Mw for the resin particles of the resin emulsion is from about 5,000 to about 3,000,000, the glass temperature thereof is from about zero to about 120°C, the weight ratio of resin to pigment is from about 1:15 to about 15:1, and said resin emulsion is present in an amount of from about 0.1 to about 50 weight percent based on the weight percent of the solid components in the ink.

6. The ink composition in accordance any of claims 2 to 5 wherein the colorant is a pigment, and the resin particles and pigment are separated by a space of at least about 10⁴ Angstroms, and which separation is enabled primarily by ionic carboxylate acid groups.

7. The ink composition in accordance with any of claims 2 to 6 wherein the vehicle is selected from the group consisting of ethylene glycol, propylene glycol, diethylene glycols, triethylene glycols, thioglycol, glycerine, dipropylene glycols, polyethylene glycols, and polypropylene glycols; amides such as urea and substituted ureas; ethers such as ethylene glycolmonomethyl ether, ethylene glycolmonoethyl ether, diethylene glycolmonomethyl ether, diethylene glycolmonoethyl ether, diethylene glycolmonobutyl ether, propylene glycolmonomethyl ether, propylene glycolmonomethyl ether, propylene glycolmonobutyl ether, triethylene glycol ether, tripropylene glycol monomethyl ether, carboxylic acids and their salts; esters; alcohols such as ethyl alcohol, isopropyl alcohol, butyl alcohol, and benzyl alcohol, organosulfides, organosulfoxides, sulfones, alcohol derivatives, carbitol, butyl carbitol, cellusolve, ether derivatives, amino alcohols, ketones, 1,3-dimethylimidizalidinone, N-methyl-2-pyrrolidinone, 2-pyrrolidone, cyclohexyl-pyrrolidone, hydroxyethers, amides, sulfoxides, lactones, and mixtures thereof.

8. The ink composition in accordance with any of claims 1 to 7 further containing ink additives.

9. The ink composition in accordance with claim 8 wherein the ink additives are selected from the group consisting of biocides, buffering agents, anti-mold agents, pH adjustment agents, electric conductivity adjustment agents, chelating agents, anti-rusting agents, anti-cockle agents, and stabilizing agents, and which components are each selected in an amount of from about 0.01 to about 10 weight percent.

10. The ink composition in accordance with any of claims 1 to 9 wherein the ionic groups are weak acids of a carboxylic acid, strong acids of a sulfonic acid, anionic salts of a sulfate, weak bases of ammonium, or strong bases of dialkyl amine and cationic salts of quaternary ammonium.

11. A stable ink jet ink comprised of a vehicle, a resin emulsion and a colorant, and wherein the emulsion resin particles and colorant are separated.

12. An ink jet recording process comprising ejecting in the form of ink droplets the ink of any of claims 2 to 10 from an orifice in accordance with a recording signal to form an image on a recording medium.
